Europäisches Patentamt

**European Patent Office**

Office européen des brevets

(19)

(11) Publication number: **0 133 340**
A1

(12) ## EUROPEAN PATENT APPLICATION

(21) Application number: **84304110.4**

(22) Date of filing: **18.06.84**

(51) Int. Cl.⁴: **B 29 C 67/18**
**// B29K105/08**

(30) Priority: **20.06.83 GB 8316732**

(71) Applicant: **The Secretary of State for Trade and Industry in Her Britannic Majesty's Government of the United Kingdom of Great Britain and, Northern Ireland 1 Victoria Street, London SW1H OET (GB)**

(43) Date of publication of application: **20.02.85**
**Bulletin 85/8**

(72) Inventor: **Scowen, Geoffrey David, Broomheath, Galston Ayrshire Scotland (GB)**

(74) Representative: **Wildman, David Brian et al, Procurement Executive Ministry of Defence Patents 1A(4), Room 2014 Empress State Building Lillie Road, London SW6 1TR (GB)**

(84) Designated Contracting States: **IT**

(54) **Zone-stiffened composites.**

(57) A composite article comprises an elastomeric matrix incorporating reinforcing fibres, and at least one distinct zone of a polymeric stiffening material. The elastomeric matrix and the polymeric material are co-polymerised within a transition region to provide an exceptionally strong chemical bond, and a graded transition from one material to the other. The stiffening material may also contain reinforcing fibres. A number of possible materials are disclosed, as well as several articles of specific form in accordance with the invention. The articles expressly disclosed are an automobile bumper, (Figs 1-3), drive couplings (Figs 4-8), an automotive constant velocity joint (Fig. 9), helicopter rotor couplings (Figs 10-15), an integral tyre and wheel (Fig. 16), and a spring of zig-zag form (Figs 18-20).

EP 0 133 340 A1

Title   Zone Stiffened Composites

Fibre reinforced plastics composites are conventionally fabricated using epoxide or polyester resins which normally have a low strain to failure of the order of 2-6 per cent for epoxides, and 2-8 per cent for polyesters.  Special purpose epoxide and polyester resins are available which can be capable of up to 100 per cent strain and even more, but these are not widely used.  Conventional fibre reinforced plastics materials are thus, in the main, limited to applications which do not require great flexibility, or the ability to absorb impacts or tolerate large strains.

Composites comprising an elastromeric matrix incorporating reinforcing fibres give the designer some increased versatility, in that such a matrix can offer the possibility of much greater strains to  failure, and considerably higher capacity for energy absorbency. For example, a urethane resin matrix has the potential for elongation of the order of 700%.

The properties of such elastromeric-matrix composites are highly advantageous in many practical applications such as automobile bumpers, flexible couplings, and springs, for example.  However in most instances, whilst capacity for elongation and flexibility are desired in a particular direction or shear plane, design considerations often dictate a requirement for stiffness in other modes of deformation.

The present inventor has appreciated the possibility of incorporating strips of stiffening material in appropriate positions in order to satisfy such a requirement.  However, this solution involves an abrupt transition from the ductile elastomeric matrix material to the material of the stiffening strips.  In order to achieve effective transfer of load between the elastomer and the stiffening strips, there must be a strong bond along the interface between the two. However, the existence of an abrupt discontinuity in mechanical properties at the bond line encourages the initiation and propagation of cracks, leading to a failure in structural integrity of the composite article.  This problem is liable to be particularly acute in the case of high performance composite articles, and/or those subject to cyclic or dynamic loading.

According to the present invention, there is provided a composite article comprising an elastomeric matrix incorporating reinforcing fibres, and at least one distinct zone of a polymeric stiffening material, said stiffening material being co-polymerised with the elastomeric matrix material within a transition region between the matrix and the stiffening zone.

The co-polymerisation provides a chemical bond between matrix and stiffening material, and a graded transition from one material to the other. The bond can thus be extremely strong, and the absence of an abrupt transition leads to efficient load transfer with more even stress distribution within the structure of the article. Crack formation and propagation is thus inhibited, and fracture toughness is increased.

In most cases the polymeric stiffening material will itself also incorporate reinforcing fibres. In this case it is then important to arrange for continuity of the fibre reinforcement from matrix to stiffening zone through the transition region. This also contributes greatly to efficient load transfer, even stress distribution etc.

Any combination of elastomeric matrix material and polymeric stiffening material can be used, provided that they are mutually compatible, and capable of co-polymerisation. By co-polymerisation is meant that by an appropriate curing process the matrix and stiffening materials form a chemically cross-linked structure in the transition region, within which molecules of the elastomeric material combine chemically with molecules of the polymeric stiffening material.

Suitable elastomeric matrix materials include polyurethanes silicone elastomers, natural rubber, polyisoprene, styrene butadiene, butadiene, polyacrylics, isobutene isoprene (butyl rubber), chloroprene (neoprene), nitrile butadiene, chlorosulphonated polyethylene, chlorinated polyethylene, ethylene propylene, flourocarbons, epichlorohydrin, flourosilicones, co-polyesters, styrene co-polymers and olefins.

Suitable polymeric stiffening materials are normally stiffer than the elastomeric matrix material, and include epoxy resins, polyester resins, phenolic resins, vinyl esters, polyamides, and polyimides.

One combination which has been found particularly effective is a polyurethane as the elastomeric matrix material together with an epoxy resin stiffening material.

Suitable fibres for reinforcement of the elastomer matrix and/ or the polymeric stiffening material are those which are compatible with the respective matrix in which they are incorporated, and include fibres of carbon, boron, glass, nylon, polyester, polyimides, aromatic polyamides (eg Kevlar - Trade Mark), metals and mixtures of fibres of these materials.

The fibres may be aligned within the elastomer matrix or the stiffening material in one or more preferred directions or planes, so that the article can tolerate enormous elastic linear or shear strains in one or more directions or planes, whilst possessing controlled stiffness as desired in others.

The invention also resides in numerous articles of specific form in accordance with the invention.

One such article is an automobile bumper wherein the elastomeric matrix incorporates reinforcing fibres aligned in the plane of the impact face of the bumper, and the polymeric stiffening material is in the form of one or more stiffening strips extending longitudinally within the elastomeric matrix.

Fixing holes for the bumper should preferably pass through a stiffening strip, and further reinforcement eg in the form of a mass of metal or fibre-reinforced resin is preferably provided around the fixing holes and in contact with the stiffening material.

Another article which can very advantageously be formed in accordance with the invention is a coupling which is able to transmit torque from a driving member to a driven member, whilst accommodating flexural and/or longitudinal or other movements and possibly misalignment therebetween.

A very satisfactory design comprises a tubular or cylindrical structure made up of reinforcing fibres inclined symmetrically with respect to the tube or cylinder axis within the elastomeric matrix, and wherein the polymeric stiffening material is provided as a number of longitudinal reinforcing strips parallel to the said axis and within the structure.

The fibres can be suitably orientated in the elastomeric matrix, for example, by braiding or filament winding.

In order to facilitate end-fixing, there is preferably provided additional polymeric stiffening material in the end regions of the structure. This can conveniently be in the form of an annulus continuous with or integral with the longitudinal reinforcing strips.

One such coupling which the invention also makes possible is an automotive constant velocity joint, or a drive shaft replacing two such joints.

Another very advantegous application for a coupling of this kind is a drive coupling for a helicopter rotor.

The invention also makes possible an entirely new concept in the form of an integral tyre and wheel,in which the elastomeric matrix forms an outer portion constituting the tyre, and the polymeric stiffening material forms at least part of an inner portion constituting the wheel.

The reinforcing fibres within the outer portion can be arranged in similar orientations to radial or cross-ply tyres, and might include or consist of conventional reinforcing cords eg of polyester, nylon or steel.

The polymeric stiffening material may be in the form of a homogeneous material which may contain randomly aligned fibres, or directionally aligned fibures such as layers of square weave or angled ply cloth.

Alternatively, the polymeric stiffening material may be in the form of radially aligned zones (equivalent to spokes) with other material or voids between the zones. These may contain, for example, radially aligned reinforcing fibres.

As well as increasing stiffness and strength, the use of stiffening material in such a design can increase compliance in the rim support so that the wheel rim can act in effect as a spring.

The integral tyre and wheel offers considerably increased safety as compared with a conventional tubeless tyre/wheel combination. The latter can deflate suddenly on impact with an obstacle, because the tyre separates from the wheel rim. With the integral tyre and wheel according to the invention, this is exceeding unlikely to happen, because of the strong chemical bond extending across the transition region between tyre and wheel portions.

A still further specific article in accordance with the invention is a spring element of zig-zag form (described by the Applicant as being of sulcated form), comprising an elongate strip of the elastomeric matrix material incorporating longitudinal zones of polymeric stiffening material, the strip being formed as a zig-zag structure.

In a convenient construction, a composite spring comprises a plurality of such zig-zag spring elements.

A spring assembly may comprise two or more such composite springs, nested one within another.

The invention will now be described by way of example only, with reference to the accompanying drawings, of which

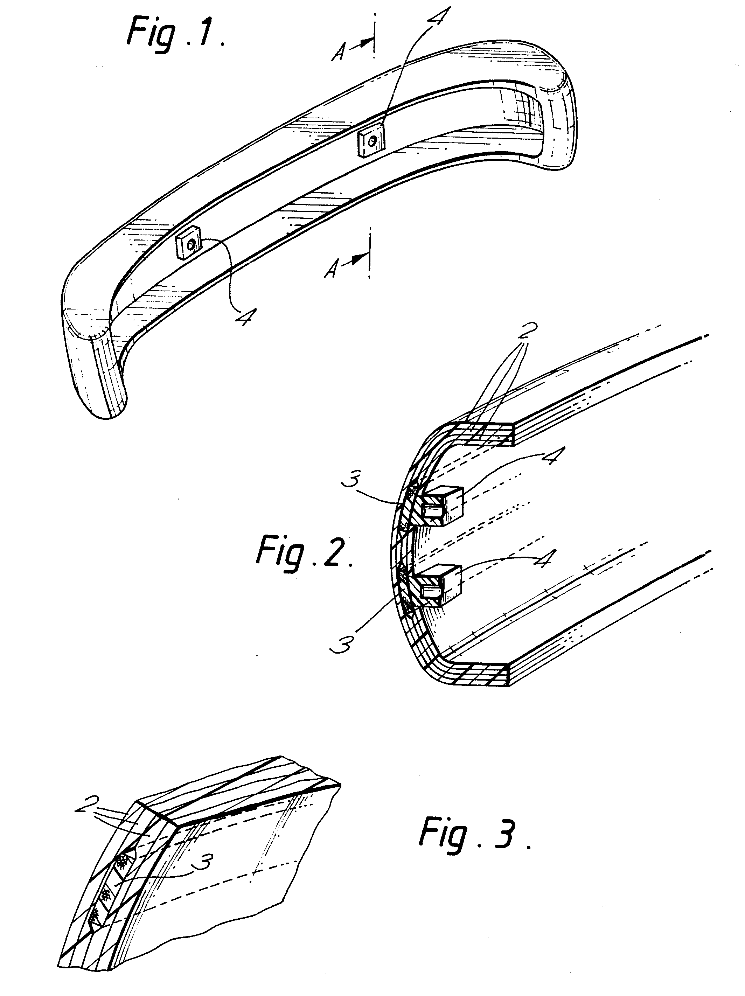

Fig 1 is a perspective view of an automobile bumper,

Fig 2 is a sectional perspective view on the line A-A of Fig 1

Fig 3 is a detailed view of a part of Fig 2, showing the arrangement of a stiffening strip,

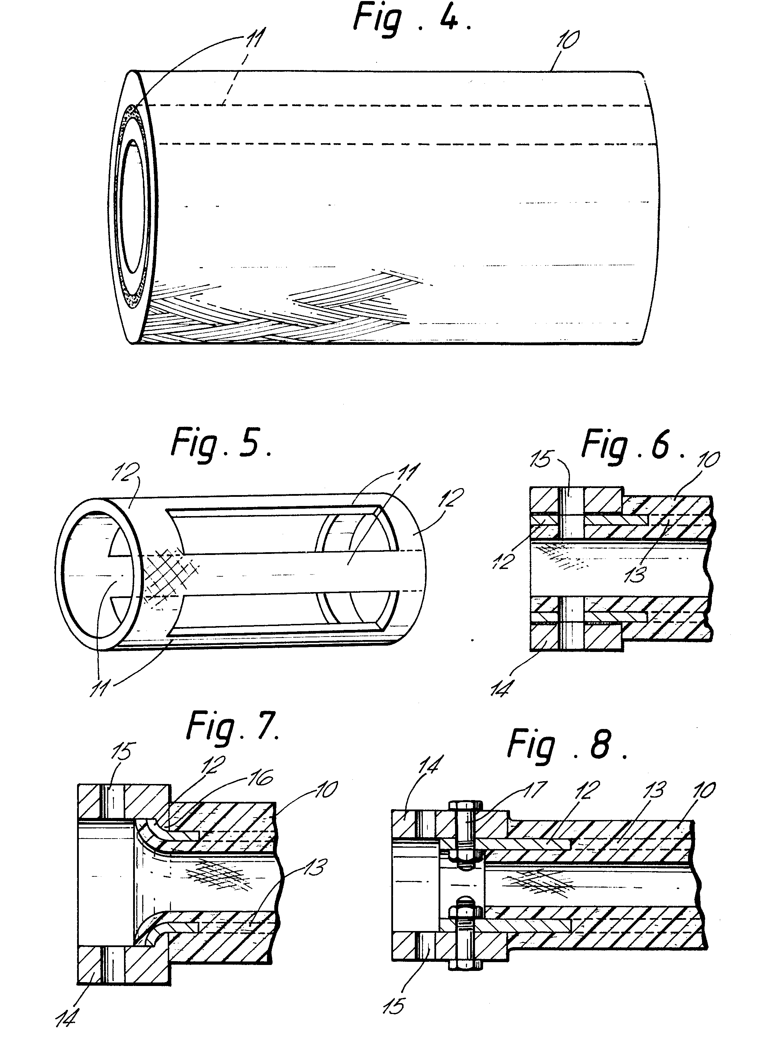

Fig 4 is a perspective view of a section of an automobile drive shaft,

Fig 5 shows a insert stiffener for use with the drive shaft of Fig 4, to facilitate end fixing,

Fig 6, 7 and 8 show various ways in which an end fixing can be accomplished,

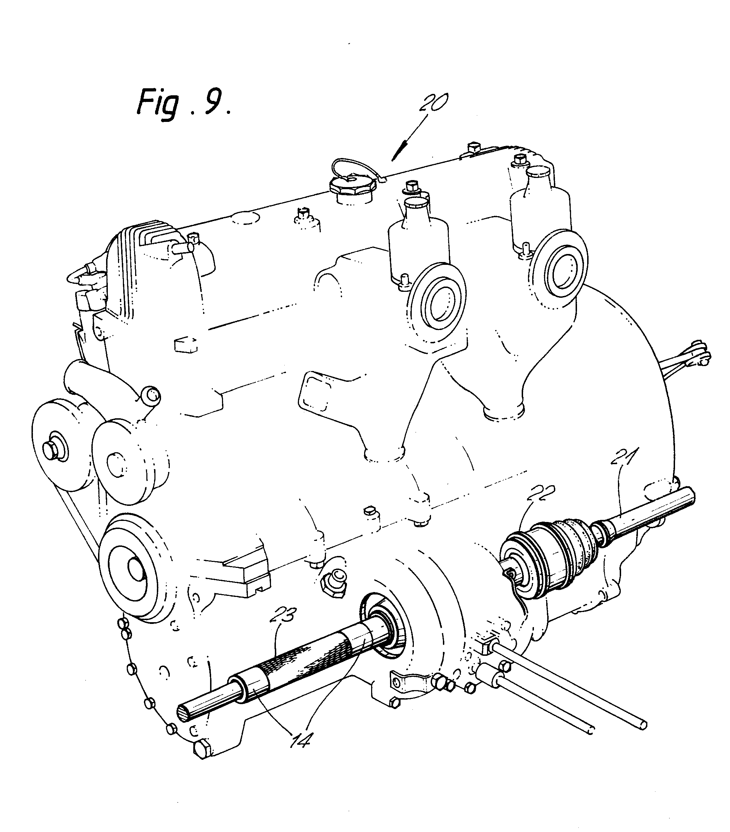

Fig 9 shows a complete drive shaft assembled in an automobile engine,

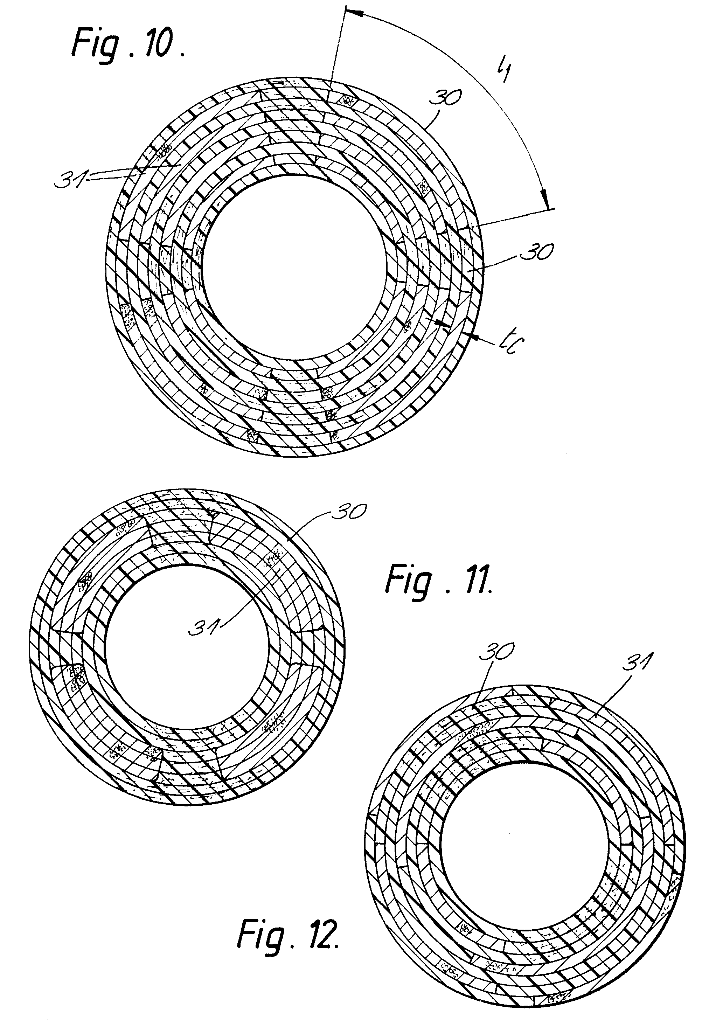

Fig 10, 11 and 12 show various possible cross-sections for a helicopter rotor coupling,

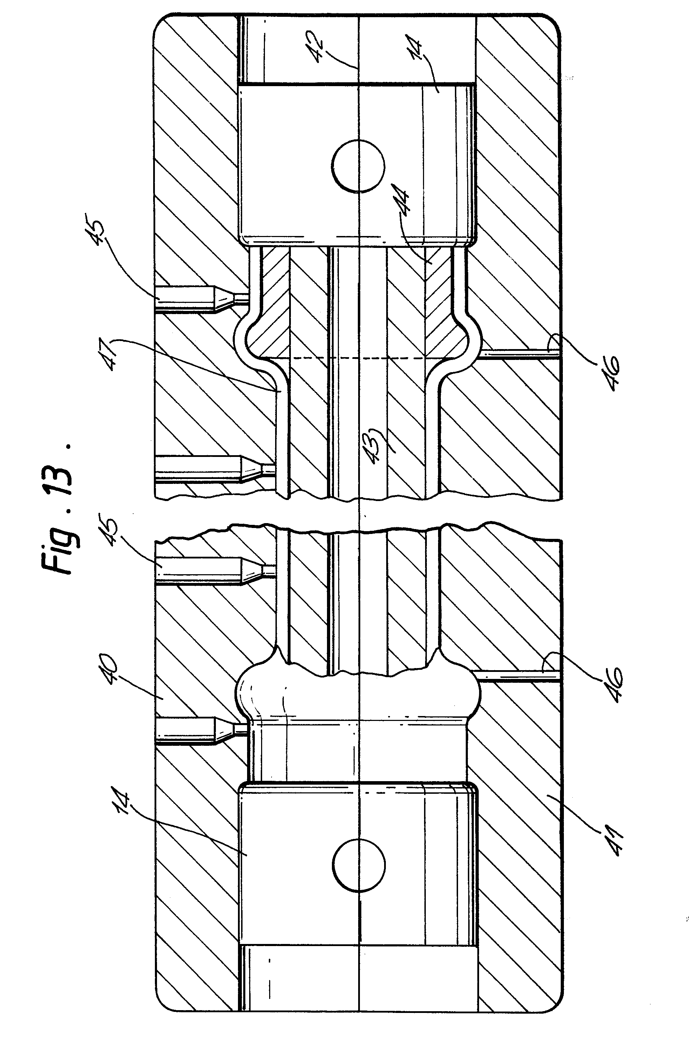

Fig 13 shows in section a mould for a helicopter rotor coupling, such as those shown in Figs 10 to 12,

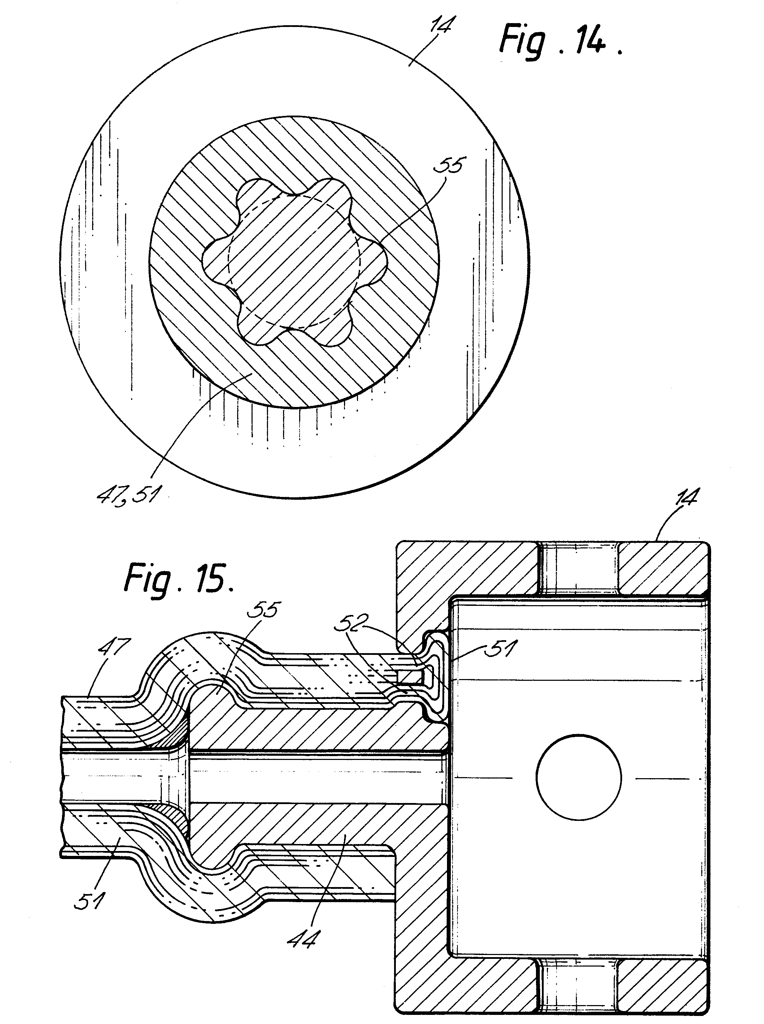

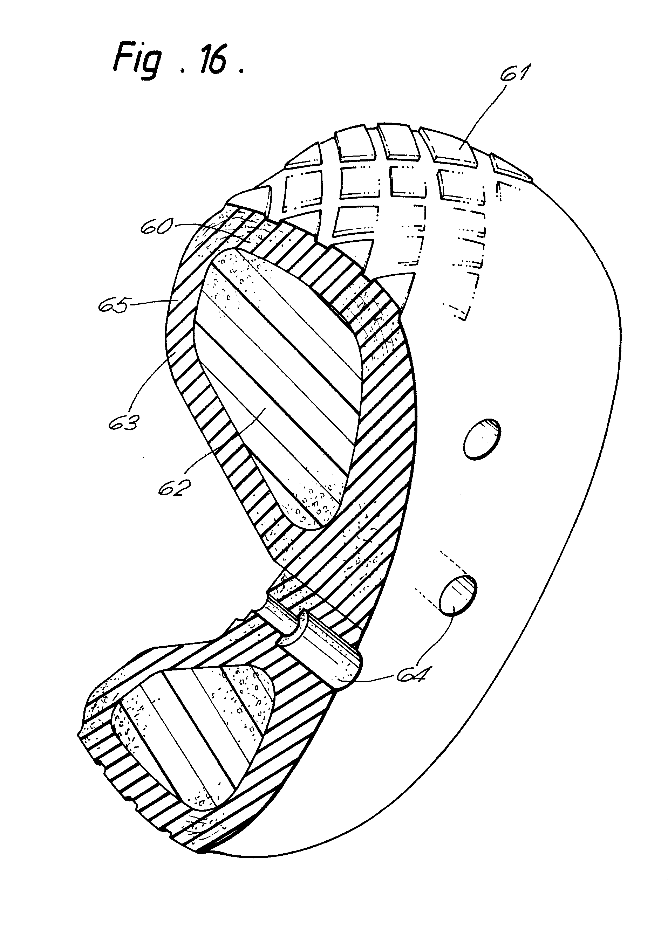

Fig 14 and 15 are respectively side and end sectional views of a part of a helicopter rotor coupling,

Fig 16 is a perspective view of an integral tyre and wheel, partially cut away,

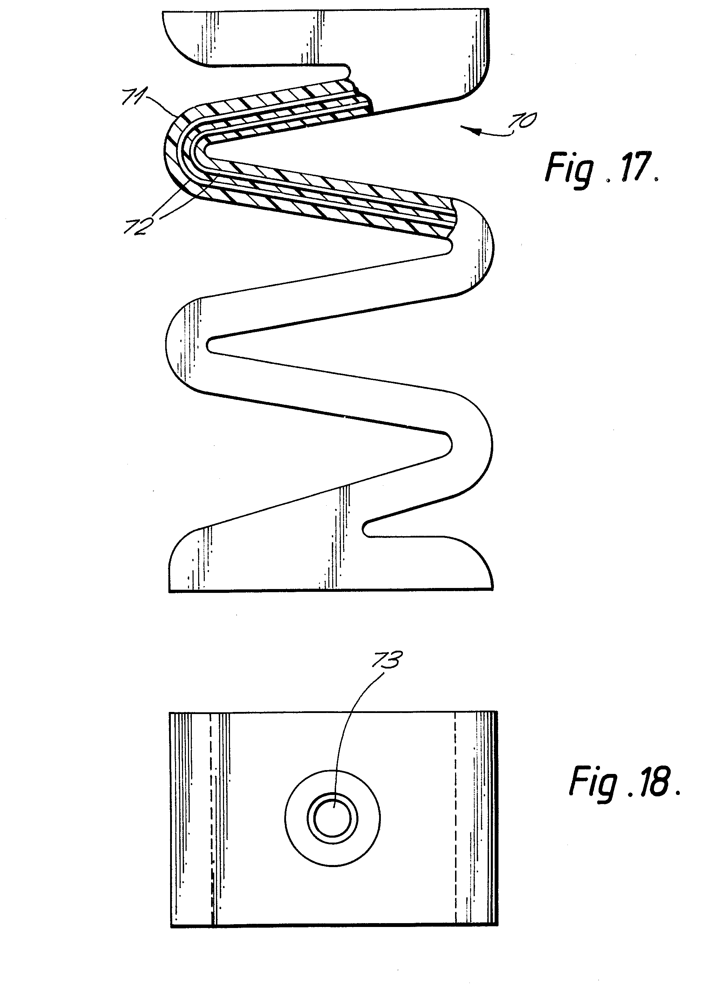

Fig 17 is a side elevation of a zig-zag spring, partially cut away,

Fig 18 is a plan view of the spring shown in Fig 17,

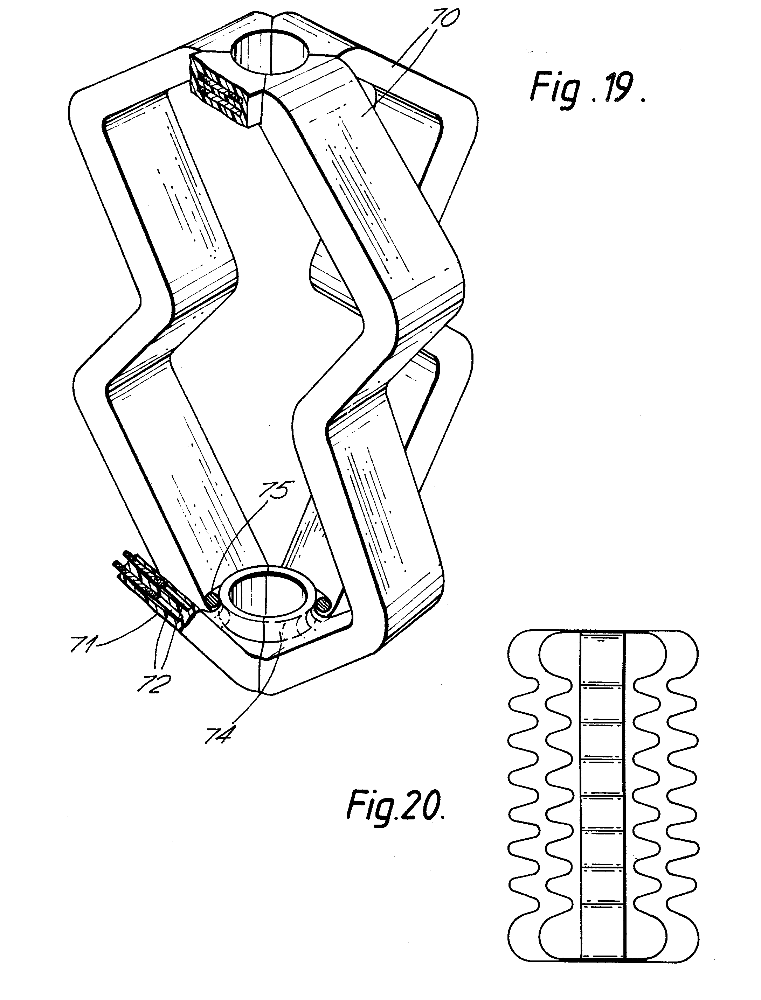

Fig 19 is a perspective view, partially broken away, of a composite spring comprising four spring elements of the kind shown in Figs 17 and 18, and

Fig 20 shows a spring assembly comprising two nested spring of the kind shown in Fig 19.

As shown in Figures 1 to 3, an automobile bumper 1 comprises a number of layers 2 of continuous long reinforcing fibres in an

elastomeric matrix of polyurethane. With the layers 2 of the impact face of the bumper, the continuous reinforcing fibres are aligned in the intended plane of impact, some longitudinally (ie to be horizontal in use) and some inclined at an angle, eg $\pm$ 45° or $\pm$ 20° to $\pm$ 70° to the horizontal. The bumper is of generally U-shaped cross-section, and the lay-up of the fibres continued into the limbs of the 'U'. The longitudinal fibres provide stiffness to limit distortion to a desirable level on impact of the bumper with a rigid object. The inclined fibres also contribute to stiffness, but at the same time provide shear resistance and fracture toughness.

Between the layers 2 of fibre/urethane composite, there are provided, one, two or more longitudinal stiffening strips 3 which are of a polymeric material such as fibre reinforced epoxy resin or polyester resin, each incorporating longitudinally aligned reinforcing fibres. These stiffening strips provide further transverse stiffness where desired, and in particular provide a stiff mounting for reinforcing blocks 4 which are provided with fixing holes for mounting the bumper to a vehicle. The reinforcing blocks can also be of fibre-reinforced epoxy resin, and should be assembled in contact with the respective reinforcing strip 3. The epoxy resin of the stiffening strip 3 and reinforcing blocks 4 can be cured in situ with the components in their final positions in the bumper, and simultaneously with the curing of the urethane matrix. This is conveniently accomplished as follows. The layers 2 are laid up in a mould as dry fibre layers, with the stiffening strips 3 and reinforcing blocks 4 in position as fibre pre-impregnated with a B-staged epoxy resin. Urethane resin together with curing agent is then injected into the mould at a suitable temperature, eg 120-135°C. The B-staged epoxy resin is relatively viscous, and remains in position, whilst the urethane resin by virtue of its lower viscosity can easily penetrate the dry layers 2, and surround the strips 3. The urethane and epoxy resin materials cure together at the injection temperature, and a transition region is created between these two materials in which molecular cross-linking occurs between the two resins.

In the finished structure, the fibre reinforced elastomer allows the flexibility and high energy absorbency which are highly desirable in an automobile bumper, whilst the fibre reinforced epoxy resin provides added stiffness where needed for impact strength and toughness against front impact, plus a firm anchor for the mounting blocks 4. The transition region between the urethane and epoxy resin matrices provides an excellent chemical bond which can tolerate large strains with considerable resistance to debonding.

In Fig 4 there is shown a composite structure suitable for use in an automobile drive joint. The structure comprises a plurality of concentric tubular braids 10 of low-angled continuous fibre. The precise angle may be up to ± 60° depending upon the application. The continuous fibre can alternatively be filament wound. Within the structure, between braids 10 or successive filament wound layers, there are included one or more longitudinal stiffening strips 11 (in this instance, four equispaced), each comprising longitudinally aligned and/or angled fibres in an epoxy resin matrix. The structure is fabricated by laying up the braids 10 in a mould, together with stiffening strip 11 preimpregnated with a B-staged epoxy resin. Urethane resin mixed together with diamine curing agent at 120-135°C is injected into the mould, and the braids are thus thoroughly impregnated on account of the low viscosity of the urethane resin, whilst the epoxy resin is relatively undisturbed. Chemical cross-linking between the urethane and epoxy resins occurs in a transition region, as a result of their simultaneous curing in situ.

Aternatively, a two stage resin injection method can be employed. In this case epoxide or another suitable resin system (eg polyester) is first injected over discrete areas of a dry fribre lay-up, on the surface and hence sub-structure of the fibre. Urethane resin is then injected so that the areas not penetrated by epoxide are fully impregnated with urethane resin, and the whole is then cured.

As shown in Fig 5, in order to facilitate end-fixings of the joint, the stiffening strips 11 can be provided as a unitary structure which also includes annular portions 12 at the ends, linking the strips 11. The fibres are orientated either longitudinally, or at predetermined positive and negative angles to the longitudinal (eg ± 45° as illustrated) − or in a combination of these orientations.

The stiffened rings 12 can be employed in various ways, for example as shown in Figs 6, 7 and 8, to facilitate end fixings by means of which torque can be transferred to and from the shaft.

As shown in Fig 6, a metallic end fitting 14 eg of mild steel, can be attached by adhesive bonding. The end fitting 14 is of annular form, and the outer layer of braiding 10 is removed so that the annular portion provides a spigot upon which the end fitting 14 is received and secured by adhesive bonding. The urethane-impregnated braid deforms to fill the spaces 13 between the stiffening strips 11. Fixing holes 15 passing through the end-fitting 14, annular portion 12, and the inner layer of composite incorporating braid 10, permit attachment to another component.

Fig 7 shows an alternative arrangement in which the end-fittings 14 is provided with a lip 16, which can be of serrated form. The end-fittings 14 is in this case attached by moulding in situ with the remainder of the joint so that the inner braided layer 10, and the annular portion 12 conform to the lip 16.

Fig 8 shows another arrangement in which the end-fitting 14 is attached by means of mechanical fastenings 17, eg nuts and bolts (as illustrated), rivets, etc.

The end-fittings 14 can alternatively be of fibre reinforced resin such as epoxy resin, and in thise case the resin is advantageously co-cured with the urethane, to provide chemical cross-linking in a transition region.

Fig 9 shows an automobile engine/transmission unit 20. On one side of the unit there is shown a conventional drive shaft 21 incorporating a conventional constant velocity joint 22 (one of a pair, the other not shown). On the other side of the unit, for comparison, the conventional drive shaft and constant velocity joints are all replaced by a drive coupling 23 of construction as described with reference to Fig 4 and 5 and including end fittings 14 as decribed with reference to any one of Figs 6 to 8. The function of the automotive constant velocity joint is to act as a universal joint drive-coupling between the flexibly mounted engine/transmission unit 20, and the flexibly mounted road wheels.

There are two crucial operational constraints.

a.   The input velocity must match the output shaft velocity, the conventional pivoting universal joint must therefore cope with large angular displacements ($\pm$ 22° articulation) since the angle between the wheel axles and the drive shafts changes more than that between the drive shafts and the transmission output shafts. A cyclic variation must not occur between the input and output shaft velocities.

b. The joint coupling must allow for relative longitudinal movement (by sliding grooves on traditional joints) between the input and output shafts owing to the axle movement, engine mounting (flexibly mounted) movement and chassis flexing movement.

The design of modern automotive constant velocity joints is still based on the principles of the Rzeppa joint (circa 1933) as modified, for example in the Cull-Birfield joint used in some front wheel drive cars. The conventional constant velocity joint is thus based on torque-transferring balls revolving in a grooved track, with sliding grooves to cope with the relative longitudinal sliding motions. This leads to high contact wear between the sliding and rolling contact surfaces which is a principal cause of bearing failure. The novel composite velocity joint and transmission shaft described with reference to Figs 5 to 9 replaces and considerably simplifies the conventional assembly of drive shaft and two universal joints.

Torque is transferred to and from the shaft via the end fittings 14 as already described. In the shaft portion itself, the angled braid 10 provides the torsional stiffness needed for transmitting torque from end to end, whilst the elastomeric nature of the urethane matrix permits considerable transverse flexibility to take up articulation between wheel axles and the transmission output. No cyclic variation in speed is introduced between the two. The braided structure in the urethane matrix also provides a substantial degree of longitudinal flexibility so as to accommodate relative longitudinal movements between transmission output and road wheels. The longitudinal stiffening strips inhibit "wind-up" due to the applied torque and provide additional torque transmission capability, fracture toughness and impact resistance without unduly inhibiting longitudinal and transverse flexibility. The cross-linking between urethane and epoxy resins in the transition region gives a structure which can tolerate the large cyclic loads imposed and resist debonding between the zones.

In Figures 10 to 12, there are shown various possible cross-sections for a helicopter rotor coupling incorporating composite material in accordance with the invention. A conventional helicopter main rotor assembly requires a complicated bearing-coupling system to withstand the large shear force components arising from gyroscopic precession and other dynamic rotor changes. The present invention makes possible a relatively simple design in which a single composite coupling avoids the need for the conventional complex bearing-coupling system.

The material for the coupling must have an unusually high ratio of extensional to shear modulus. As shown in Figs 10 to 12, this requirement can be met by a hollow-section coupling comprising tubular braids 30 of continuous fibres (eg carbon fibres) having a low angle of inclination to the longitudinal, the braids being incorporated in a matrix of urethane resin. Longitudinal stiffening strips 31 comprising longitudinally aligned fibres (eg carbon fibres) in an epoxide resin matrix are included between the layers of braid/urethane. Various configurations of the stiffening zones are possible, as illustrated by way of example in the three figures (Figs 10 to 12). The urethane and expoxy resins are cured together _in situ_ to provide a chemical bond in a transition region, the bond being highly resistant to delamination.

The arrangement shown in Fig 10 enables a good bond to be obtained between urethane and epoxy resin layers, and provides smooth stress distribution through the thickness of the structure. The arrangement shown in Fig 11 permits easier fabrication by the insertion of monolithic rib stiffeners 31, although bonding between layers need to be of a particularly high quality, and stress distribution is less smooth. The structure shown in Fig 12 has the advantages of Fig 10, and in addition, the overlapping of layers 31 leads to increased resistance to layer shearing. In each case the stiffening zones 31 are made circumferentially discontinuous in order to permit a degree of flexural movement. Where lower flexural movement is desired, the zones 31 could be made circumferentially continuous.

The braided fibre/urethane structure by virtue of the low fibre angle (normally $1° \quad \theta_{1c} \quad 20°$) and elastomeric matrix material is able to transmit torque to the rotor, but with reduced torsional stiffness so that lagging and torsional motions can be accommodated whilst maintaining manageable control loads. The angled braid construction also increases transverse and longitudinal shear toughness. The strips 31 give increased flexural rigidity (to withstand precession forces) without significantly increasing torsional stiffness. The increased rigidity can be controlled by appropriate design of chord length $l_1$ and thickness of the strips $t_c$ (Fig 10).

Instead of braids 30, other techniques to give similar fibre orientations are possible, eg filament winding or knitting. Other fibres than carbon can be used, eg Kevlar (Trade Mark), glass, Boron, or mixtures of any of these fibres.

End fixings for the coupling can be designed along similar lines to those described with reference to Figs 5 to 8, and the coupling is conveniently fabricated by laying up the dry tubular braids 30 in a mould with the stiffening strips 31, the latter being impregnated with B-staged epoxy resin. Urethane resin including curing agent is then injected into the mould at a temperature of about 120-135°C, at which both resin systems cure.

In Figure 13 there is shown a suitable mould for making components of the kind described in relation to Figs 4 to 12.

The mould casing is constructed in two halves 40, 41 which split along a parting line 42. The casing contains a cylindrical mandrel core 43. The upper half 40 of the mould casing is provided along its length with a number of injection feed holes 45, and the lower half 41 has likewise a number of outlet ports 46.

The use, fibre 47 in braided or other form is laid up dry on the mandrel 43 and shaped end pieces 44, longitudinal stiffening strips (not shown) pre-impregnated with epoxy resin being laid up according to design between the dry fibre layers, and end fittings 14 including shaped spigot portions 44 being incorporated according to design. Urethane resin with curing agent is injected through ports 46 at a temperature in the range 120° to 135°C. The urethane resin owing to its low viscosity readily permeates around the dry fibres and excess urethane resin escapes through ports 46. At the temperatures indicated the urethane and expoxy resins both cure rapidly, with a transition region in which the two resins are chemically cross-linked, and the stiffness of the matrix material thus varies progressively. After curing the two mould sections are parted along the line 42, and the core 43 and 44 is removed to leave a finished article, such as a one-piece automotive drive coupling, complete with end fitting.

Figs 14 and 15 show in greater detail how an end fitting 14 which is especially suitable for connecting between a helicopter rotor blade and the main drive bearing system can be built into the coupling in a mould as described with reference to Fig 13. Steel wires 51 are looped through pairs of holes 52 in the fitting, and interleaved with layers of braided fibres 47 and stiffening strips (not shown). The end fitting is provided with a spigot 44 having enlarged serrations 55, by which the end fitting can be firmly located against twisting or longitudinal movements relative to the composite structure. The wires 51 looped through the holes 52 provide added security against separation of the end fitting 14 from the remainder of the coupling. After laying the wires 51 in place in the dry condition, the coupling can be finished as previously described in relation to Fig 13. In the case of such a helicopter rotor coupling a non-symmetrical coupling cross-section, such as an aerofoil section, may be more appropriate, as the blade does not rotate about its axis to any great degree.

Fig 16 illustrates a tyre and wheel of integral construction made possible by use of composite material in accordance with the invention. The outer zone 60 constituting the tyre section comprising a urethane matrix incorporating long (continuous) fibres of materials such as carbon, nylon, glass or aromatic polyamide laid up in configurations corresponding to the reinforcing cords in conventional radial or cross-ply tyres. Reinforcing cords of conventional materials such as polyester or steel can also be included in the tyre zone in conventional orientations. The tyre tread 61 is moulded in the same urethane material. An integral foam core 62 is included during moulding to maintain the tyre in a "inflated" condition. Alternatively, the internal volume can be sealed to permit pneumatic inflation.

The inner zone 63 of the wheel comprising rim and hub is formed of a fibre-reinforced epoxy resin composite in which the alignment of the fibres is important for strength and stiffness. Layer combinations of square weave or angled ply cloth, or similar structures derived by machine or hand lay-up would be suitable. Fixing holes 64 are provided in the hub area, and fibre reinforced urethane elastomeric matrix material can be included around the fixing holes, cured simultaneously with the expoxy resin. This can lead to reduced stress concentrations as a result of the flexibility of the urethane, where wheel bolts are tightened.

The whole assembly is moulded together by laying a pre-preg of the inner zone 63 in a mould, the pre-preg comprising reinforcing fibres in a B-staged epoxy resin matrix. Dry long fibres are laid according to design around the fixing hole positions and in the tyre zone, and a foam core is introduced. The mould is closed and urethane resin plus diamine curing agent is introduced at a temperature in the range 120-150°C, so that the urethane and expoxy resin materials cure together. The urethane resin readily permeates the long fibres in the tyre and fixing hole areas. The combined curing creates a transition region in which cross-linking occurs between the two matrix materials, so that stress distribution between the flexible tyre material and the stiff rim, and in the area of the fixing holes, is gradual and smooth.

The novel structure leads to numerous advantages, including the following:-

a. Since there is no tyre/wheel rim interface as is normal with a conventional wheel assembly, stress distribution is gradual and smooth, hence there is less chance of catastrophic failure such as an instant air loss when tyre and rim are impacted. Also, no damage is transmitted between tyre and rim which is often the case when a metal or plastic wheel rim is accidentally abraded due to tyre fitting or curb impact damage.

b. No tyre and rim slippage.

c. If a tyre fails catastrophically the flexible co-cured transition region can temporarily absorb large movements and hence act as an emergency wheel.

d. The fabricating techniques for tyre and rim are compatible and should lead to easier manufacturing and a lower cost wheel/ rim assembly.

e. Low weight (compared with conventional steel rim construction).

f. Low corrosion.

g. No tyre/wheel balancing is required.

h. Reduced tyre wear.

In Figs 17 and 18 there is shown a single-element spring 70 of zig-zag form, composed of a matrix of urethane 71 incorporating long (continuous) fibres, and stiffening strips 72 of longitudinally

14

aligned fibres in an epoxy resin matrix. Fixing holes 73 are included at top and bottom. The zig-zag spring differs from the conventional helical spring in that deflections occur as a result of bending rather than torsional deformation of the spring material. The long fibres within the urethane matrix are thus aligned so as to resist bending, ie if the spring is imagined as a folded sheet, the fibres are oriented to follow the plane of the sheet. Within this limitation, these fibres can be laid up by many automated techniques such as braiding, filament winding, tape winding, or woven or knitted cloths can be used.

The spring is moulded by laying up the stiffening strips as fibres in a B-staged epoxy resin, within a lay-up of the dry continuous fibres. Urethane resin plus curing agent in introduced at 120-150° to achieve simultaneous curing of the two resins with a transition zone, as with other embodiments.

As shown in Fig 19, a more complex spring can be built up from a number of elements or segments 70. In this instance, each of four segments 70 has an arcuate lip 74 moulded to its inner edges at top and bottom. These are designed to co-operate with similar lips 74 on other segments so that when fitted together, an annular groove is formed, into which a retaining ring 75 can be snap-fitted at top and bottom to retain the four segments together.

As shown in Fig 20, two (or possibly more) such complex springs can be nested to achieve performance desired for some applications, eg a non-linear spring rate.

Some of the advantages of the spring constructed as described with reference to Figs 17 to 20 are as follows:-

a.   The stress and deflection in the spring may not be proportional to the applied load. This non-linearity is due to the possible changes in sectional form when the spring is being deflected leading to striking changes in the load/deflection characteristics. This is one of the main advantages of this type of spring, since it is possible to obtain almost any desired variation in spring rate and also obtain a considerable range of deflection under almost constant load.

b.   In a multi-segment construction, the individual spring segments can be fabricated to possess varying spring stiffness in x and y directions.

c.    By exploiting the damping characteristics of the urethane matrix material, varying degrees of damping can be incorporated into the spring segments to provide a combined shock absorber/spring system which can cope with varying x-y velocity components.

d.    The stiffening zones, the thickness, width, angle and length of the limbs can all be designed to obtain large variations in the bending stiffness and torsional stiffness.

e.    The damping mass of the fibre/elastomeric matrix can be maximised by the increasing number of limbs and their length, thickness and width.

f.    Large strains are possible due to the use of elastomeric urethane composite, directional stiffness can be 'tailored' by incorporation of co-cured fibre/epoxy resin strips creating stiff zones, with smooth stress fields in the transition region. Non-linear spring rates can be achieved also with the hybrid composite configuration.

g.    Many fibre fabrication systems can be used in conjunction with resin injection techniques such as braiding, filament winding, tape winding, woven cloth and knitted cloth, on account of the ease of injection moulding with low viscosity urethane. Since the spring's principal mode of operation relies on bending stiffness rather than torsional stiffness which is the principal mode with helical spring construction, the geometrical variables in the zig-zag spring mentioned can be varied to achieve large variations in bending resistance.

h.    By nesting as in Fig 20 or alternatively, by varying the volume ratio of fibre/epoxy composite to fibre/urethane composite or the ply angle at, say, the end limbs of the spring, a non-linear spring rate characteristic can also be achieved.

i.    Low weight is possible.

j.    Low corrosion.

It should be understood that the invention is not limited to the specific features of the embodiments described, but variations which will be apparent to those skilled in the art are to be considered as within its scope.

Where reference is made to reinforcing fibres, this term includes any fibre which is compatible with the matrix concerned and

16

0133340

the design requirements. Fibres the use of which are within the scope of the invention include carbon, aromatic polyamide such as Kevlar (Trade Mark), polyimides, glass, and boron.

The term "epoxy resin" is also well understood in the art to encompass thermosetting resin systems based on polyglycidyl resins which may be cured by homopolymerising (with a catylyst) or co-polymerising (with a hardener). For the avoidance of doubt the following at least are to be understood as falling within the scope of this term:-

Bisphenol (A) type - for excellent mechanical and electric properties

Cycloaliphatic - for good arc and tracking resistance and weatherability

Epoxidised Novalacs - for good heat resistance

In many cases, depending upon the design, epoxy resins can be replaced by other stiffening materials, such as polyester resins, phenolic resins, vinyl esters, and polyimides in embodiments of the invention, and such a substitution is also considered to be within the scope of the invention.

The term "urethane" is well understood in the art. In their thermosetting form the urethanes are produced by the reaction of a polyisocyanate with a polyester or polyester-based resin. Two general classes of curing agent commonly used are polyols and diamines to give a wide range of physical properties.

The term "urethane resin" includes urethanes which are either homopolymerised or co-polymerised with other suitable materials, for example by the action of a suitable curing agent.

In many cases, depending again upon design and compatibility with other elements of the article, urethene resins can be replaced in embodiments of the invention by other elastomeric materials, and such a substitution is considered to be within the scope of the invention.

Claims

1. A composite article comprising an elastomeric matrix incorporating reinforcing fibres, and at least one distinct zone of a polymeric stiffening material, characterised in that said stiffening material is co-polymerised with the elastomeric matrix material within a transition region between the matrix and the stiffening zone.

2. A composite article according to claim 1 characterised in that the polymeric stiffening material itself incorporates reinforcing fibres.

3. A composite article according to claim 1 or claim 2 characterised in that the elastomeric matrix material is selected from the group comprising polyurethanes, silicone elastomers, natural rubber, polyisoprene, styrene butadiene, butadiene, polyacrylics, isobutene isoprene, chloroprene, nitrile butadiene, chlorosulphonated polyesthylene, chlorinated polyethylene, ethylene propylene, flourocarbons, epichlorohydrin, flourosilicones, co-polyesters, styrene co-polymers, and olefins.

4. A composite article according to any one preceding claim characterised in that the polymeric stiffening material is selected from the group comprising epoxy resins, polyester resins, phenolic resins, vinyl esters, polyamides and polyimides.

5. A composite article according to claim 1 or claim 2 characterised in that the elastomeric matrix is a polyurethane and the polymeric stiffening material is an epoxy resin.

6. A composite article according to any one proceding claim characterised by reinforcing fibres incorporated within the elastomeric matrix or the stiffening material which fibres are of a material selected from the group comprising carbon, boron, glass, nylon, polyester, polyimides, aromatic polyamides, metals, and mixtures of fibres of these materials.

7. A composite article according to any one preceding claim characterised by fibres which are aligned within the elastomer matrix or the stiffening material in one or more preferred directions or planes.

8. An automobile bumper being an article according to any one preceding claim characterised in that the elastomeric matrix (2) incorporates reinforcing fibres aligned in the plane of the impact face of the bumper (1), and the polymeric stiffening material is in the form of one or more stiffening strips (3) extending longitudinally within the elastomeric matrix.

9. An automobile bumper according to claim 8 characterised in that fixing holes pass through a stiffening strip (3), and further reinforce-

0133340

ment (4) is provided around the fixing holes and in contact with the stiffening material (3).

10. A coupling being an article according to any one of claims 1 to 7 for transmitting torque from a driving member to a driven member, characterised in that the coupling comprises a tubular or cylindrical structure made up of reinforcing fibres (10) inclined symmetrically with respect to the tube or cylinder axis within the urethane matrix, and wherein the polymeric stiffening material is provided as a number of longitudinal reinforcing strips (11) parallel to the said axis and within the structure.

11. A coupling according to claim 10 characterised in that there is provided additional polymeric stiffening material (12) in the end regions of the structure.

12. A coupling according to claim 10 or claim 11 characterised in that it is an automotive constant velocity joint, a drive shaft (23) replacing two such joints, or a drive coupling for a helicopter rotor.

13. An integral tyre and wheel being a composite article according to any one of claims 1 to 7, characterised in that the elastomeric matrix forms an outer portion (60) constituting the tyre, and the polymeric stiffening material forms at least part of an inner portion (63) constituting the wheel.

14. A spring element of zig-zag form being a composite article according to any one of claims 1 to 7, characterised in that it comprises an elongate strip of the elastomeric matrix material (71) incorporating longitudinal zones (72) of polymeric stiffening material, the strip being formed as a zig-zag structure.

15. A composite spring characterised in that it comprises a plurality of zig-zag spring elements (70), each according to claim 14.

16. A spring assembly characterised in that it comprises two or more composite springs each according to claim 15 and nested one within another.

17. A composite article according to claim 1 and substantially as hereinbefore described.

18. A composite article substantially as hereinbefore described with reference to any one or more of the accompanying drawings.

0133340

1/9

Fig. 1.

Fig. 2.

Fig. 3.

0133340

2/9

Fig. 4.

Fig. 5.

Fig. 6.

Fig. 7.

Fig. 8.

Fig . 9 .

0133340

4/9

Fig . 10 .

Fig . 11 .

Fig . 12 .

*Fig . 13 .*

0133340

6/9

14

Fig . 14 .

55

47,51

Fig . 15 .

55

47

52

51

51

44

14

Fig . 16 .

0133340

**Fig. 17.**

71

72

70

73

**Fig. 18.**

0133340

Fig .19.

71
72
75
74
70

Fig.20.

0133340

European Patent
Office

EUROPEAN SEARCH REPORT

. Application number

EP 84 30 4110

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 513 567 (PEUGEOT) * whole document and especially claim 1 * | 1 | B 29 C 67/18 // B 29 K 105/08 |
| A | * page 3, line 12 - page 4, line 7 * | 2-5 | |
| A | DE-A-1 945 248 (VEB REIFENKOMBINAT) * whole document and especially page 1, lines 1-16 * | 1 | |
| A | GB-A-1 485 361 (P. GOODWIN) * claims 1,9,10; figures 1,2 * | 1 | |
| A | FR-A-2 221 930 (RENAULT) * page 2, line 24 - page 3, line 30; figures 1-3 * | 7,8 | TECHNICAL FIELDS SEARCHED (Int. Cl.4) |
| A | DE-A-1 729 849 (VORWERK) * claim 1; figure 1 * | 13 | B 29 C B 29 K C 08 J F 16 C F 16 F |
| A | GB-A-1 511 692 (SECRETARY OF STATE FOR DEFENCE) * claim 1; figures 1,2 * | 14-16 | |
| A | DE-A-2 125 397 (DUNLOP) | | |

--- -/-

The present search report has been drawn up for all claims

| Place of search THE HAGUE | Date of completion of the search 02-10-1984 | Examiner WELSCH H.R. |
|---|---|---|

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl.4) |
|---|---|---|---|
| A | US-A-4 076 891 (DUNLOP) <br><br> * abstract * <br><br> ----- | | |
| | | | **TECHNICAL FIELDS SEARCHED (Int. Cl.4)** |

The present search report has been drawn up for all claims

| Place of search THE HAGUE | Date of completion of the search 02-10-1984 | Examiner WELSCH H.R. |
|---|---|---|